Europäisches Patentamt

**European Patent Office**

Office européen des brevets

(19)

(11) Veröffentlichungsnummer: **0 159 284**
**B1**

(12) **EUROPÄISCHE PATENTSCHRIFT**

(45) Veröffentlichungstag der Patentschrift:
**19.11.87**

(51) Int. Cl.⁴: **B 60 L 3/10**

(21) Anmeldenummer: **85730014.9**

(22) Anmeldetag: **31.01.85**

(54) Verfahren zur Regelung der Antriebs- oder Bremskraft der Fahrmotoren eines laufachsenlosen elektrischen Triebfahrzeuges an der Haftreibungsgrenze der Räder.

(30) Priorität: **24.02.84 DE 3407309**

(43) Veröffentlichungstag der Anmeldung:
**23.10.85 Patentblatt 85/43**

(45) Bekanntmachung des Hinweises auf die Patenterteilung:
**19.11.87 Patentblatt 87/47**

(84) Benannte Vertragsstaaten:
**AT CH DE FR GB IT LI SE**

(56) Entgegenhaltungen:
**DE - A - 2 707 047**
**DE - A - 3 011 541**
**DE - A - 3 244 288**
**DE - B - 2 917 673**

(73) Patentinhaber: **Licentia Patent-Verwaltungs-GmbH,**
**Theodor-Stern-Kai 1, D-6000 Frankfurt/Main 70 (DE)**

(72) Erfinder: **Hahn, Karl, Dipl.-Ing., Hirzerweg 9,**
**D-1000 Berlin 33 (DE)**

(74) Vertreter: **Lertes, Kurt, Dr. et al, Licentia**
**Patent-Verwaltungs-GmbH Theodor-Stern-Kai 1,**
**D-6000 Frankfurt/M 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Regelung der Antriebs- oder Bremskraft der Fahrmotoren eines laufachsenlosen elektrischen Triebfahrzeuges an der Haftreibungsgrenze der Räder gemäss dem Oberbegriff des Patentanspruches 1.

Ein derartiges Verfahren zur elektronischen Laufachsennachbildung ist z.B. aus der DE-A1-3 011 541 bekannt. Die Pseude-Laufachsendrehzahl ist dabei die Ausgangsgrösse eines Integrators, dessen Eingang folgende Grössen zugeführt werden: eine entsprechende Grösse zu der erwarteten Beschleunigung aufgrund der das Fahrzeug beschleunigenden Kräfte und seiner Masse sowie das Ausgangssignal eines Komparators. Letzterer bildet jeweils die Differenz aus der Pseudo-Laufachsdrehzahlgrösse und einer Auswahl aus allen Achsdrehzahlen, d.h. beim Fahren einer Kleinstwert- und beim Bremsen einer Grösstwertauswahl. Das Ausgangssignal des Komparators beeinflusst den Integrator nur, wenn die Pseudo-Laufachsdrehzahlgrösse die Auswahldrehzahl bei vorliegendem Fahrbefehl überschreitet bzw. bei Bremsbefehl unterschreitet und führt dann den Integrator so weit zurück, bis die Pseudo-Laufachsdrehzahl der Auswahldrehzahl gleicht. Die Differenzen der Achsdrehzahlen mit der Pseudo-Laufachsdrehzahl bilden die Signale für den Radschlupf auf der Schiene und werden zur Reduzierung der Zug- bzw. Bremskraft ausgewertet.

Es ist andererseits bekannt, dass mit Fahrmotoren, die eine steile Md(n)-Kennlinie aufweisen, eine besonders gute Haftwertausnutzung erzielt werden kann, wenn man nicht mittels der Drehmomentregelung die Parameter der Kennlinie mit der Drehzahl mitführt, sondern die Parameter der Kennlinie von der tatsächlichen Fahrzeuggeschwindigkeit abhängig macht. Ein Beispiel hierfür sind die amerikanischen dieselelektrischen Lokomotiven, vgl. auch ASME-Publikation 80-WA/RT-3, S. 1-9, der Rail Transportation Division of The American Society of Mechanical Engineers von 1980.

Ein Verfahren zum Erreichen einer entsprechenden Wirkung mit Drehstromfahrmotoren wird in der am 30.5.1984 veröffentlichten Patentanmeldung P 32 44 288 vorgeschlagen. Es gestattet die extreme Steilheit der natürlichen Kennlinie des Asynchronmotors, die zu störenden dynamischen Vorgängen bei einsetzendem Radschlupf führen kann, in ihrer Wirkung beliebig zu verflachen und damit auf die jeweiligen Verhältnisse optimal einzustellen.

Die letzteren Verfahren gehen jedoch davon aus, dass die tatsächliche Fahrzeuggeschwindigkeit über Grund messtechnisch erfasst werden kann, wozu eine echte Laufachse, oder wenn nicht vorhanden, eine Radarsonde erforderlich ist. Laufachsen gibt es in Lokomotiven grundsätzlich nicht mehr. Radarsonden können durch Schnee und Eisbildung behindert werden, so dass sie kurzzeitig kein richtiges Signal liefern. Erschwerend kommt hinzu, dass die Messungen mit sehr grosser Genauigkeit benötigt werden. Die Eichung der Radarsonde und die Korrektur der Raddurchmesserunterschiede müssen so aufeinander abgestimmt sein, dass die gegenseitigen Abweichungen klein gegenüber dem optimalen Radschlupf bleiben, der bei wenigen Prozenten liegt. Hierzu sind wegen der betrieblichen Abnutzung der Radreifen automatische Abgleichvorrichtungen notwendig.

Eine Anordnung gemäss der genannten DE-A1-3 011 541 statt mit einer echten Geschwindigkeitsmessung über Grund mit einer Pseudo-Laufachse zu betreiben, führt nicht ohne weiteres zum Erfolg. Einerseits sind bei dem Integrator über längere Zeit beträchtliche Fehler nicht zu vermeiden, und andererseits muss stets eine etwas grössere Beschleunigung eingestellt werden, als die tatsächliche Beschleunigung des Fahrzeugs, um die Fahrt nicht zu behindern. Es ist daher notwendig, das Ausgangssignal des Integrators immer wieder zu korrigieren, sobald schlupffreier Betrieb vorliegt. Dies geschieht mit Komparatorschaltungen, die den Integrator zurückführen. Sie setzen jedoch voraus, dass nach jedem Schlupfvorgang durch entsprechend starke Reduzierung des Motordrehmomentes möglichst schnell der Rollzustand oder zumindest ein Zustand mit sehr kleinem Mikroschlupf wiederhergestellt wird. Reduziert man das Drehmoment nur proportional zum Schlupf, d.h. hier zur Drehzahldifferenz Pseudo-Laufachsdrehzahl/Treibachsdrehzahl, dann wird der Integrator die Pseudo-Laufachse mit der ihm vorgegebenen Beschleunigung weiter zu höheren Geschwindigkeiten führen, auch wenn das Fahrzeug mit immer stärker schlüpfenden Rädern dahinter zurückbleibt. Der Radschlupf würde langsam, aber unaufhaltsam ausser Kontrolle geraten.

Es ist bereits ein Verfahren zur Führung einer solchen Integratorschaltung bekannt, das diesen Nachteil dadurch vermeidet, dass bei eintretendem Radschlupf vom fallenden Drehmomentverlauf gesteuert dem Integrator ein zusätzliches rückwärtstreibendes Eingangssignal zugeführt wird (DE-B2-2 917 673). Dieses Verfahren hat aber den Nachteil, dass wegen der direkten Verarbeitung der Ständerfrequenz des Fahrmotors im Integrator das vorgeschlagene Verfahren der Verflachung der sehr steilen natürlichen Kennlinie des Drehstromasynchronmotors nach Patentanmeldung P 32 44 288 nicht angewendet werden kann.

Aufgabe der Erfindung ist es, ein Verfahren anzugeben, das eine genauere Führung des Integrators für die Pseudo-Laufachse gestattet und das es erlaubt, das vorgeschlagene Verfahren zur Verflachung der wirksamen Md(n)-Kennlinie des Drehstrommotors für einen Betrieb mit kontrolliertem Radschlupf an der Reibwertgrenze auch für Fahrzeuge anzuwenden, die bisher keine Möglichkeit zur direkten Messung der Geschwindigkeit über Grund haben.

Diese Aufgabe wird nach der Erfindung durch die kennzeichnenden Merkmale des Patentanspruches 1 gelöst. Die Erfindung kann bei allen Fahrmotoren angewendet werden, deren Motoren drehmoment- oder stromgeregelt betrieben werden. Voraussetzung ist hierzu, dass die Motorregelung so reaktionsschnell ist, dass die bei Drehmomentänderungen auftretenden Verzögerungszeiten genügend kurz gegenüber den Zeitabläufen bei Schleuderansätzen bleiben. Eine vorteilhafte Ausgestaltung der Erfindung ist dem abhängigen Anspruch entnehmbar.

Anhand eines schematischen Ausführungsbeispieles wird die Erfindung im nachstehenden näher erläutert. Es zeigen:

Fig. 1 ein Blockschaltbild für die Regelung einer Treibachse mit wechselrichtergespeistem Drehstromfahrmotor,

Fig. 2 Drehmomentenverläufe über dem Radschlupf,

Fig. 3 und 3a Blockschaltbildergänzungen zur verbesserten Drehmomentenreduzierung.

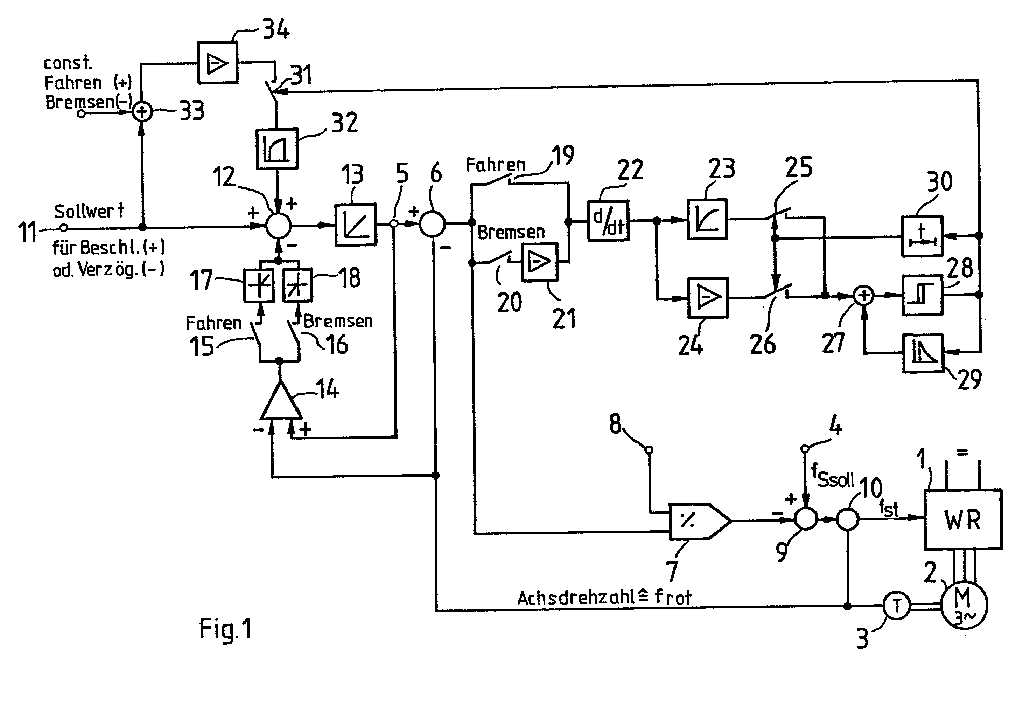

In Fig. 1 ist mit 1 ein Wechselrichter bezeichnet, der einen Drehstromfahrmotor 2 speist. Die Achsdrehzahl wird z.B. von einer Tachometermaschine 3 (oder einem Drehimpulsgeber mit Auswerter) erfasst. An einen Eingang 4 ist der in der Antriebsregelung aus dem Drehmomentsollwert abgeleitete Sollwert für die Schlupffrequenz $f_{Ssoll}$ des Motors gelegt. Bei 5 liegt anstelle der echt gemessenen Fahrzeuggeschwindigkeit über Grund jetzt die Pseudo-Laufachsdrehzahl an, die in der Subtraktionsstelle 6 mit der gemessenen Achsdrehzahl aus der Tachometermaschine 3 verglichen wird. Die in der Subtraktionsstelle 6 ermittelte Drehzahldifferenz wird in einem Dividierer 7 durch einen geeigneten bei 8 eingegebenen konstanten oder von Geschwindigkeit und/ oder Zugkraft abhängigen Faktor geteilt. Multiplikation mit seinem Reziprokwert ist ebenfalls möglich. Der erhaltene Wert wird in einer Subtraktionsstelle 9 vom Sollwert der Motorschlupffrequenz $f_{Ssoll}$ abgezogen. In einem Summierer 10 wird als Summe aus Rotationsfrequenz $f_{rot}$ und gewünschter Motorschlupffrequenz die Wechselrichterfrequenz als Ständerfrequenz $f_{st}$ des Fahrmotors 2 gebildet.

Bei 11 wird der Wert der erwarteten Beschleunigung bzw. Verzögerung zugeführt, abgeleitet aus der Zug- bzw. Bremskraft und der Fahrzeugmasse. In Lokomotiven ist hierfür die Anhängelast zu berücksichtigen, was mit einer automatischen Adaptierung erfolgen kann. Dieser Wert wird in einem Integrator 13 zum Drehzahlwert der Pseudo-Laufachse integriert. Der Integrator 13 ist so dimensioniert, dass er um einen kleinen Toleranzbereich schneller integriert, als es der Fahrzeugbeschleunigung entspricht, so dass die Pseudo-Laufachsdrehzahl der Fahrzeug-Istgeschwindigkeit langsam vorauslaufen würde. Der Integrator 13 erhält deshalb eine zusätzliche Rückführung über einen Komparator 14, die Schaltstellen 15 und 16, sowie die Einweg-Gleichrichter 17, 18 oder andere, jeweils nur Signale einer Polarität durchlassende Anordnungen, sowie eine Additionsstelle 12. Im Komparator 14 wird der Integratorausgang, d.h. die Pseudo-Laufachsdrehzahl mit der Drehzahl der wirklichen Achse verglichen. Positive Differenz (d.h. die Pseudo-Laufachse läuft schneller) wird nur im Betriebszustand «Fahren» (15 geschlossen) über 17 an den Integrator 13 gegeben und steuert damit die Pseudo-Laufachse abwärts, bis sie mit der Drehzahl mit der wirklichen Achse übereinstimmt. Negative Differenz (d.h. die Pseudo-Laufachse läuft langsamer) wird nur im Zustand «Bremsen» (16 geschlossen) über 18 an den Integrator 13 gegeben und steuert die Pseudo-Laufachse aufwärts bis Übereinstimmung der Drehzahl mit der wirklichen Achse vorliegt. Hierdurch wird der Integratorausgang, solange die wirkliche Achse rollt, nicht mehr beschleunigt oder verzögert als das Fahrzeug. Die Drehzahlwerte stimmen überein, d.h. bei 6 treten keine Drehzahldifferenzen auf.

Bei auftretendem Radschlupf wird im Zustand «Fahren» die Achse stärker beschleunigen als das Fahrzeug. Der Integrator 13 kann jetzt nicht über die Rückführung mitgenommen werden, weil bei 17 ein Signal dieser Polarität nicht durchgelassen wird. Es entsteht bei 6 eine Drehzahldifferenz wie zwischen Treibachse und echter Laufachse. Beim Bremsen kehrt sich die Polarität der Differenz um, wodurch das Rückführungssignal über 16, 18 geleitet wird.

Das bei 6 auftretende Drehzahldifferenzsignal steuert dann, wie zu den Bezugszeichen 1 bis 10 beschrieben, das Drehmoment des Fahrmotors.

In diesem Stadium hat aber die Pseudo-Laufachsdrehzahl einen Wert erreicht, der nicht mehr der Geschwindigkeit über Grund, sondern der einer sich bereits mit dem Schlupf auf der Schiene drehenden Achse entspricht, der zur Übertragung der maximal möglichen Zugkraft notwendig ist. Das kommt daher, dass während der Entstehung dieses Schlupfes, vom reinen Rollen der Treibachse an, diese kaum messbar stärker beschleunigt als das Fahrzeug und der Integrator bis dahin noch der Achsdrehzahl folgen kann. Die stärkere Beschleunigung der Treibachse setzt erst dann ein, wenn diese den Schlupf des maximalen Reibwertes überschritten hat.

Ohne weitere Massnahmen würde jetzt des weiteren der Pseudo-Laufachsintegrator 13 frei weiterlaufen, wobei die Pseudo-Laufachse allmählich gegenüber dem Fahrzeug immer schneller wird. Die Treibachse würde damit ebenfalls immer grösseren Schlupf annehmen und schliesslich doch ins Schleudern geraten.

Dies zu verhindern, ohne aber die Treibachse unter starker Zugkrafteinbusse in den reinen Rollzustand zurückführen zu müssen, dient die erfindungsgemässe Anordnung mit den Bezugszeichen 19 bis 34.

Hierbei bilden 19, 20, 21 eine Umpolvorrichtung, die im Bremsbetrieb die Polarität des Drehzahldifferenzsignals tauscht. 22 ist eine Differenziervorrichtung, die die erste zeitliche Ableitung des Drehzahldifferenzsignals bildet. Mit 23 ist ein Verzögerungsglied erster Ordnung bezeichnet, das den Anstieg des Ausgangssignals von 22 etwas verflacht. Die Schaltstellen 25, 26 und der Invertierer 24 bilden eine Umpolvorrichtung für dieses Signal. 28 ist eine Grenzwertstufe mit einer zusätzlichen differenzierenden Rückführung 29 über eine Addierstelle 27 am Eingang. 30 bezeichnet ein Zeitverzögerungsglied, über das vom Ausgang von Grenzwertstufe 28 die Schalter 25 und 26 der Umpolvorrichtung angesteuert werden. Der Schalter 31 wird ebenfalls vom Ausgang der Grenzwertstufe 28 angesteuert und schaltet ein aus dem Beschleunigungs- bzw. Verzögerungssollwert (erwartete Beschleunigung) und einer bei 33 dazu addierten konstanten Grösse gebildetes, in einem Invertierer 34 invertiertes Signal über eine Zeitgliedanordnung 32 und die Addierstelle 12 zusätzlich an den Eingang des Pseudo-Laufachsintegrators 13.

Diese Anordnung wirkt wie folgt:

Wenn am Differenzbildner 5 eine Drehzahldifferenz erscheint, haben die Räder, wie vorstehend beschrieben, den Schlupf auf den Schienen überschritten, der die grösste Kraftübertragung ermöglicht. Sie laufen in den instabilen Schlupfbereich ein, d.h. mit noch grösser werdendem Schlupf wird der Haftwert wieder kleiner. Der jetzt grösser werdende Drehmomentüberschuss beschleunigt die im Vergleich zur Fahrzeugmasse nur kleine rotierende Masse des Radsatzes mit Fahrmotor relativ schnell. Der Anstieg der Drehzahldifferenz wird im Differenzierer 22 erfasst und bringt über das Verzögerungsglied 23 (zur Ausfilterung kurzzeitiger Störungen), den Schalter 25 und die Additionsstelle 27 die Grenzwertstufe 28 zum Ansprechen. Deren Ausgangssignal betätigt den Schalter 31, wodurch ein aus dem erwarteten Beschleunigungswert 11 und einer dazu addierten Kontanten (bei 33) gebildetes und im Invertierer 34 invertiertes Signal über die Zeitstufe 32 und das Additionsglied 12 am Eingang des Integrators 13 wirksam wird. Die Zeitstufe 32 lässt einen Teil des Signals sofort passieren, den Rest mit einer Verzögerung erster Ordnung bis zur vollen Höhe ansteigen. Eine Abfallverzögerung für das Signal enthält Zeitstufe 32 nicht, wie symbolisch angedeutet.

Der Integrator 13 wird dadurch langsamer und beginnt, sobald das Zusatzsignal das direkte Signal übersteigt, in umgekehrter Richtung zu integrieren. Die Pseudo-Laufachsdrehzahl wird wieder kleiner. Hierdurch steigt die Drehzahldifferenz an 6 zunächst noch schneller, gleichzeitig wird jedoch mit dem grösseren Drehzahldifferenzsignal auch das Drehmoment des Fahrmotors noch stärker reduziert. Die weitere Beschleunigung des Radsatzes hört dadurch auf, der Radsatz beginnt sich wieder zu «fangen», d.h. in den stabilen Schlupfbereich zurückzulaufen. Da sich hierbei die Radsatzdrehzahl wieder der Pseudo-Laufachsdrehzahl nähert, wird auch das Drehzahldifferenzsignal bei 6 wieder kleiner. Die Abwärtssteuerung des Integrators über den Schalter 31 muss jetzt noch so lange aufrechterhalten werden, bis der Radsatz den stabilen Schlupfbereich wieder erreicht hat, d.h. über das Haftwert-Maximum der Haftwert/Schlupfkurve hinweggelaufen ist. Andernfalls würde das System im instabilen Bereich bleiben und schliesslich doch ins Schleudern geraten.

Diesem Zweck dient die Umpoleinrichtung mit den Schaltstellen 25 und 26 sowie Invertierer 24. Sie polt das Eingangssignal der Grenzwertstufe 28 um, so

dass diese solange für negatives $\dfrac{d(\triangle n)}{dt}$, also Verringerung des Drehzahldifferenzsignals, empfindlich wird. Die Umschaltung erfolgt durch das Ausgangssignal der Grenzwertstufe 28 nach Ablauf der Verzögerungszeit des Zeitgliedes 30.

Nach Ansprechen der Grenzwertstufe 28 auf eine ansteigende Drehzahldifferenz lässt das Zeitglied 30 eine Zeitspanne vergehen, die etwa derjenigen entspricht, die das System Pseudo-Laufachse — Drehmomentreduzierung — rotierende Masse Radsatz/ Fahrmotor benötigt, bis die Tendenzumkehr im Radschlupf beginnt. Dann erfolgt die Umschaltung bei 25 und 26 und die Grenzwertstufe 28 wird von dem nunmehr negativen Signal am Differenzierer 22, das jetzt in 24 invertiert wird, weiterhin positiv angesteuert. Die Lücke zwischen dem verschwindenden positiven Signal über 25 und dem neuen Signal über 26 wird durch die Rückführung 29 gefüllt, die nach Ansprechen von Grenzwertstufe 28 ein kurzzeitiges Zusatzsignal über die Addierstelle 27 an den Eingang von Grenzwertstufe 28 liefert. Deren Zeitdauer ist zu der des Zeitgliedes 30 passend abgestimmt.

Damit wird die Pseudo-Laufachsdrehzahl mit dem Integrator 13 so lange zurückgesteuert, bis der Radsatz wieder in den stabilen Schlupfbereich zurückgelaufen ist. Von da ab steigt der Drehzahldifferenzwert wieder an, wenn die Pseudo-Laufachsdrehzahl weiter zurückgenommen wird, weil das auf die Schiene übertragene Drehmoment nun wieder kleiner wird und der Radsatz seine Drehzahl langsamer verringert als die Pseudo-Laufachse. Der negative Ausgangswert des Differenzierers 22 verschwindet wieder und die Grenzwertstufe 28 kippt zurück. Der Schalter 31 öffnet und der Integrator 13 beschleunigt die Pseudo-Laufachse wieder wie vor Beginn des Vorganges.

Falls sich der Haftwert auf den Schienen nicht inzwischen verbessert hat, so dass die vorgegebene Zugkraft wieder voll übertragen werden kann, wird sich nun der Vorgang wiederholen. Der Radsatz läuft dann wieder über das Haftwertmaximum in den instabilen Schlupfbereich und wird in der beschriebenen Weise zurückgeholt usw.

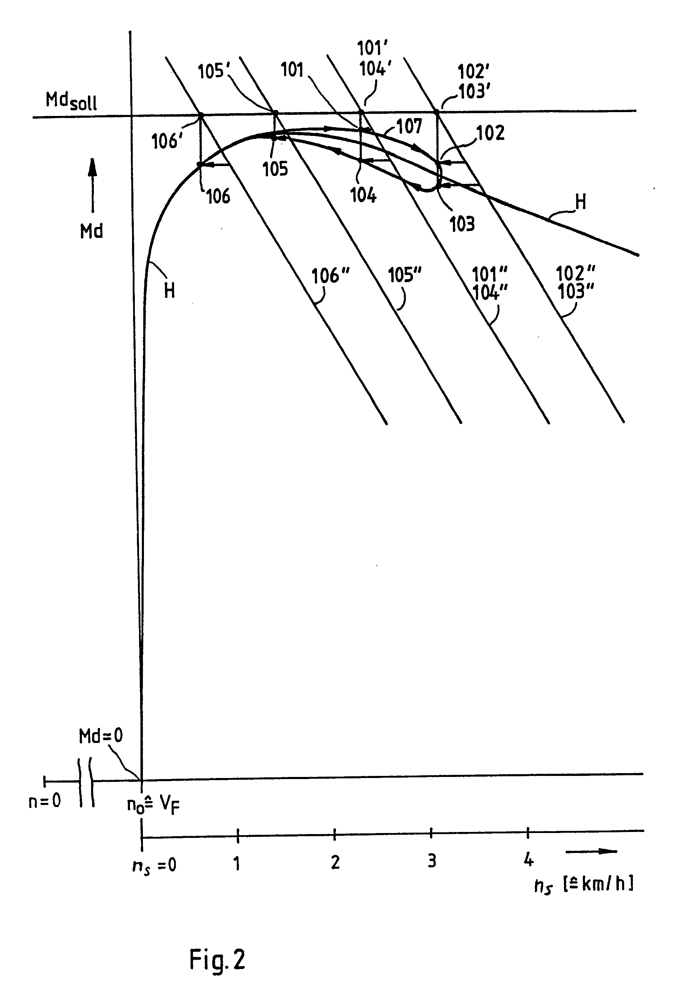

Anhand der Fig. 2 soll der Vorgang weiter veranschaulicht werden. Es sind aufgetragen: In der Abszisse die Drehzahl des Radsatzes n, wobei $n_o$ die der augenblicklichen Fahrzeuggeschwindigkeit $V_F$ entsprechende Drehzahl ist, wenn der Radsatz ohne Schlupf rollt. $n_s$ ist der Schlupf der Räder auf der Schiene, der besseren Übersicht wegen in km/h Umfangsgeschwindigkeit umgerechnet. Auf der Ordinate ist Md das am Radsatz wirkende Drehmoment; $Md_{soll}$ der an der Motorregelung vorgegebene Drehmomentsollwert. Mit H bezeichnet ist die Haftwertkurve, hier dargestellt als das vom Radsatz auf die Schienen übertragene Drehmoment in Abhängigkeit vom Schlupf $n_s$. 101 bis 106 sind nacheinander durchlaufende Drehmoment/Drehzahl-Arbeitspunkte des Radsatzes, 101' bis 106' die entsprechenden Punkte auf der Sollwertlinie, durch die von der Motorregelung jeweils die Motorkennlinie Md(n), 101'' bis 106'', gelegt wird. Die waagerechten Pfeile zu den Punkten 101 bis 106 der jeweils zugehörigen Motorkennlinie 101'' bis 106'' zeigen, um wieviel das $\triangle n$-Signal die Motorkennlinie über 7, 9 und 10 in Fig. 1 verschoben hat. Die Pfeillänge ist also dem $\triangle n$-Signal proportional.

Der Vorgang sei vom Punkt 101 ausgehend betrachtet. Da das Soll-Drehmoment etwas höher liegt als das nach der Haftwertkurve maximal bei knapp 2 km/h übertragbare Moment, beginnt der Radsatz in den instabilen Schlupfbereich zu laufen. Durch die grössere Beschleunigung ist bereits ein kleines $\triangle n$ entstanden, die Motorkennlinie 101'' ist etwas verschoben und das Drehmoment von 101' auf 101 verringert. Der verbleibende Drehmomentüberschuss von 101 bis zur Haftwertkurve H beschleunigt den Radsatz weiter, das Restmoment bis zur Haftwertkurve wird als Zugkraft wirksam. Der Radsatz beschleunigt entlang dem Kurvenstück 107, wobei der $\triangle n$-Wert zu- und das Drehmoment abnimmt, wie die veränderten Werte bei 102 zeigen. Das ansteigende

△n-Signal bringt die Grenzwertstufe 28 in Fig. 1 zum Ansprechen und löst damit die Umkehr des Pseudo-Laufachsintegrators 13 aus.

Die Pseudo-Laufachsdrehzahl wird rückläufig, dadurch wird das △n-Signal noch grösser und reduziert das Drehmoment so weit, dass es nun die Haftwertkurve H unterschreitet. Der Drehmomentüberschuss wird negativ und der Radsatz beginnt zu verzögern und wieder dem Haftwertmaximum zuzustreben. Die weiter durchlaufenen Punkte 104 und 105 zeigen, dass dabei das △n-Signal wieder kleiner wird. Der Radsatz nähert sich wieder der Pseudo-Laufachse, er verlangsamt sich schneller als diese bei nun wieder steigendem Drehmoment.

Inzwischen ist das Zeitglied 30 (Fig. 1) abgelaufen und das Signal am Eingang der Grenzwertstufe 28 umgepolt, so dass diese jetzt vom negativen

$\dfrac{d(\triangle n)}{dt}$-Signal positiv angesteuert wird und die

Pseudo-Laufachse weiterhin ihren Drehzahlwert verkleinert. Erst nach Durchlaufen des Punktes 105 in

Richtung 106 wird △n nicht mehr kleiner. $\dfrac{d(\triangle n)}{dt}$

wird dann Null und schliesslich wieder positiv und die Grenzwertstufe 28 kippt zurück. Die Pseudo-Laufachse beschleunigt wieder, der Radsatz läuft mit steigendem Drehmoment wieder auf den Punkt 101 zu und der Vorgang beginnt von neuem. Auf diese Weise pendelt der Radsatz ständig um das Haftwertmaximum, solange es vom vorgegebenen Drehmomentsollwert überschritten wird.

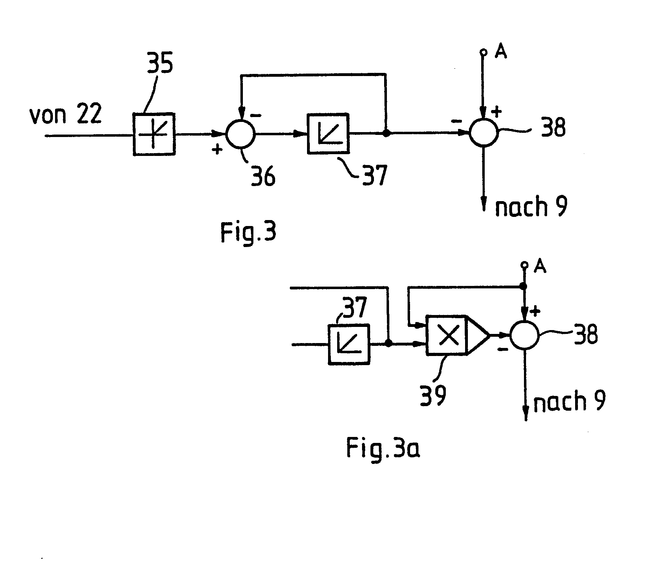

Diese Wirkungsweise ist in Fig. 2 für den Fall dargestellt, dass der Drehmomentsollwert relativ dicht über der Haftwertgrenze liegt. Damit der Vorgang auch dann noch mit gleicher Sicherheit funktioniert, wenn längere Zeit ein den Haftwert weit übersteigender Sollwert vorgegeben wird, kann das erfindungsgemässe Verfahren gemäss Fig. 3 ergänzt werden. Die dortige Anordnung besteht aus einem

Integrator 37, der vom $\dfrac{d(\triangle n)}{dt}$-Wert aus dem Differenzierer 22 angesteuert wird und zwar über die nur positive Halbwellen durchlassende gleichrichtende Stufe 35. Zurück läuft der Integrator 37 nur durch die Rückführung aus seinem eigenen Ausgang über die Additionsstelle 36. Er läuft wie ein Verzögerungsglied erster Ordnung nach Null zurück, wenn von 22 her kein Signal mehr ansteht. Der Integratorausgang reduziert proportional den von A kommenden Drehmomentsollwert in einem Subtraktionsglied 38. Eine weitere Verbesserung bringt eine Multiplikation seines Ausgangswertes mit dem vorgegebenen Sollwert mittels des Multiplizierers 39, wie in Fig. 3a dargestellt.

Bei passender Wahl der Integrationsparameter hebt jeder nach Fig. 2 ablaufende Vorgang beim Durchlaufen der Kurve 107 zwischen den Punkten

101 und 103 durch den positiven $\dfrac{d(\triangle n)}{dt}$-Ausgang

des Differenzierers 22 den Ausgang des Integrators 37 etwas an und bewirkt dadurch eine kleine Reduzierung des Drehmomentsollwertes. Folgen die Vorgänge schnell aufeinander, dann kumulieren sie am Integrator 37, ehe er in der Zwischenzeit mit seiner Rückführung wieder zurückgelaufen ist und es bildet sich stufenweise eine grössere Reduzierung des Sollwertes, bis die Vorgänge nach Fig. 2 wieder seltener werden oder aufhören. Dadurch wird der Drehmomentsollwert selbsttätig immer dicht über die Haftwertgrenze gehalten.

Will man das erfindungsgemässe Verfahren auf andere als Drehstromfahrmotoren anwenden, so kann man den △n-Ausgang des Subtraktionsgliedes 6 statt an den Eingang des Dividierers 7 an eine Einrichtung anschliessen, die den entsprechenden Motorkennlinienparameter beeinflusst (z.B. die Motorspannung bei Gleichstromfahrmotoren), sofern die Motorkennlinien Md = f(n) steil genug sind. Andernfalls schliesst man ihn an dieselbe Einrichtung zur Reduzierung des Drehmomentsollwertes an, wie den Integrator 37 in Fig. 3 bzw. 3a. Hierzu ist aber eine genügend schnelle Fahrmotorregelung Voraussetzung, die zur Reduzierung des Ist-Momentes keine im Vergleich zum Vorgang nach Fig. 2 zu grosse Tot- und Aufbauzeit benötigt.

**Patentansprüche**

1. Verfahren zur Regelung der Antriebs- oder Bremskraft der Fahrmotoren (2) eines laufachsenlosen elektrischen Triebfahrzeuges an der Haftreibungsgrenze der Räder unter Verwendung einer die zu erwartende Beschleunigung oder Verzögerung integrierenden Einrichtung (13) als Pseudolaufachse, deren Ausgangsgrösse in Differenz zur wirklichen Achsdrehzahl als Mass des Radschlupfes zur Reduzierung des Antriebs- oder Bremsmomentes ausgewertet wird, wobei im schlupffreien Betrieb über einen auf einen weiteren Eingang der integrierenden Einrichtung (13) wirkenden Regelkreis (14 - 18) das Ausgangssignal der integrierten Einrichtung der tatsächlichen Achsdrehzahl nachgeführt wird, gekennzeichnet durch folgende Merkmale:

— es wird in einem Differenzierer (22) die erste zeitliche Ableitung der Drehzahldifferenz zwischen

Pseudolaufachse und wirklicher Achse ($\dfrac{d(\triangle n)}{dt}$) gebildet und damit eine Grenzwertstufe (28) angesteuert, deren Ausgang dem Integrator (13) der Pseudolaufachse eine zusätzliche Eingangsgrösse aufschaltet,

— die zusätzliche Eingangsgrösse hat zu der dem Integrator (13) zugeführten Beschleunigungs- oder Verzögerungssteuergrösse durch einen Invertierer (34) umgekehrtes Vorzeichen und beeinflusst je nach Grösse Integrationsrichtung oder Halt des Integrators (13),

— nach einer durch ein Zeitglied (30) gebildeten Verzögerungszeit wird zwischen dem Differenzierer (22) und dem Eingang der Grenzwertstufe (28) ein Invertierer (24) geschaltet,

— die Grenzwertstufe (28) hat über eine Rückführung (29) eine Rückfallverzögerung,

— die Verzögerungszeit der Zuschaltung des Invertierers (24) und die Rückfallverzögerung der Grenzwertstufe (28) sind derart auf die Dynamik des Antriebes abgestimmt, dass bei der Aussteuerung der Grenzwertstufe (28) eine Lücke zwischen dem Auftreten des positiven und negativen Ausgangssignals des Differenzierers (22) gefüllt wird.

2. Verfahren nach Anspruch 1, dadurch gekennzeichnet, dass an den Ausgang des Differenzierers (22) für die Drehzahldifferenzgrösse ($\triangle$n) über ein nur die positive Grösse durchlassendes Glied (35) ein weiterer Integrator (37) angeschlossen ist, dessen Ausgangsgrösse über ein Additionsglied (36) an seinen Eingang den Integrator (37) ohne Eingangssignal wie ein Verzögerungsglied erster Ordnung nach Null zurückgeführt und dass die Ausgangsgrösse des Integrators (37) zur proportionalen Reduzierung des Drehmomentsollwertes für den Fahrmotor verwendet wird.

## Claims

1. Method for the regulation of the driving or braking force of the traction motors (2) of dead-axle-free electrical traction vehicle at the static friction limit of the wheels with the use of an equipment (13), which integrates the acceleration or deceleration to be expected and the output magnitude of which by difference from the actual rotational axle speed is evaluated as measure of the wheel slip for reduction of the driving or braking moment, as pseudo-dead-axle, wherein the output signal of the integrating equipment is in the slip-free operation made to follow the actual rotational axle speed by way of a regulating circuit (14 to 18) acting on a further input of the integrating equipment (13), characterised by the following features:

— the first time derivative of the rotational speed difference between pseudo-dead-axle and actual axle ($\dfrac{d(\triangle n)}{dt}$) is formed in a differentiator (22) and a limit value stage (28) is driven thereby, the output of which imposes an additional input magnitude on the integrator (13) of the pseudo-dead-axle,

— the additional input magnitude due to an inverter (34) has a sign opposite to the acceleration or deceleration control magnitude conducted to the integrator (13) and according to magnitude influences the direction of integration or halting of the integrator (13),

— after a delay time formed by a timing member (30), an inverter (24) is connected between the differentiator (22) and the input of the limit value stage (28),

— the limit value stage (28) has a relapse delay due to a feedback path (29), and

— the delay time of the switching-in of the inverter (24) and the relapse delay of the limit value stage (28) are matched to the dynamic behaviour of the drive in such a manner that a gap between the appearance of the positive and the negative output signal of the differentiator (22) is filled on the modulation of the limit value stage (28).

2. Method according do claim 1, characterised thereby, that further integrator (37) is connected by way of a member (35), which lets through only the positive magnitude, to the output of the differentiator (22) for the rotational speed difference magnitude ($\triangle$n) and has an output magnitude which by way of an addition member (36) at its input returns the integrator (37) without input signal to zero like a delay member of first order and that the output magnitude of the integrator (37) is used for the proportional reduction of the torque target value for the traction motor.

## Revendications

1. Procédé pour régler l'effort d'entraînement ou de freinage des moteurs de traction (2) d'un véhicule moteur électrique sans essieu porteur, à la limite d'adhérence des roues, avec utilisation d'un dispositif (13) intégrant l'accélération ou la décélération à prévoir et formant un pseudo-essieu porteur, dont la grandeur de sortie, par sa différence avec la vitesse de rotation d'essieu réelle, est utilisée comme mesure du patinage des roues pour réduire le couple d'entraînement ou de freinage, procédé dans lequel, pendant la marche sans patinage ou glissement des roues, le signal de sortie du dispositif intégrateur est asservi à la vitesse de rotation d'essieu réelle par un circuit de réglage (14 - 18) agissant sur une autre entrée du dispositif intégrateur (13), caractérisé en ce que:

— il comprend la formation, dans un différentiateur (22), de la première dérivée par rapport au temps de la différence de vitesse entre le pseudo-essieu et un essieu réel ($\dfrac{d(\triangle n)}{dt}$) et le pilotage, par cette première dérivée, d'un étage de valeur limite (28) dont la sortie applique une grandeur d'entrée supplémentaire à l'intégrateur (13) du pseudo-essieu porteur,

— la grandeur d'entrée supplémentaire a un signe inversé, par un inverseur (34), par rapport à la grandeur d'accélération ou de décélération amenée à l'intégrateur (13), et influence, selon sa grandeur, le sens d'intégration ou l'arrêt de l'intégrateur (13),

— un inverseur (24) est intercalé entre le différentiateur (22) et l'entrée de l'étage de valeur limite (28) après un retard produit par un élément à retard (30),

— l'étage de valeur limite (28) présente un retard au retour à la position initiale par suite de la prévision d'une rétroaction (29) et

— le retard à la mise en circuit de l'inverseur (24) et le retard au retour de l'étage de valeur limite (28) sont accordés à la dynamique de l'entraînement, de manière que soit rempli un intervalle entre l'apparition du signal de sortie positif et l'apparition du signal de sortie négatif du différentiateur (22) lors de la commande de l'étage de valeur limite (28).

2. Procédé selon la revendication 1, caractérisé en ce qu'un autre intégrateur (37) est raccordé à la sortie du différentiateur (22) pour la grandeur de la

vitesse différentielle ($\triangle$n), à travers un élément (35) qui laisse seulement passer les grandeurs positives, intégrateur (37) dont la grandeur de sortie est appliquée à travers un élément d'addition (36) à l'entrée de cet intégrateur pour, en l'absence d'un signal d'entrée, le ramener vers zéro comme un élément à retard du premier ordre, et que la grandeur de sortie de l'intégrateur (37) est utilisée pour la réduction proportionnelle de la valeur de consigne du couple du moteur de traction.

Fig.1

Fig.2

Fig.3

Fig.3a